Europäisches Patentamt

European Patent Office

Office européen des brevets

(19)

(11) EP 0 702 153 B1

(12) EUROPEAN PATENT SPECIFICATION

(45) Date of publication and mention
of the grant of the patent:
**12.05.1999 Bulletin 1999/19**

(51) Int Cl.[6]: **F04B 39/12**, F04B 35/04

(21) Application number: **95117446.5**

(22) Date of filing: **29.01.1993**

(54) **Hermetic compressor**

Hermetischer Verdichter

Compresseur hermétique

(84) Designated Contracting States:
**DE GB IT**

(43) Date of publication of application:
**20.03.1996 Bulletin 1996/12**

(62) Document number(s) of the earlier application(s) in
accordance with Art. 76 EPC:
**93300662.9 / 0 608 594**

(73) Proprietor: **MATSUSHITA REFRIGERATION
COMPANY
Higashiosaka-shi Osaka-fu (JP)**

(72) Inventors:
• **Koyama, Takashi
Osaka (JP)**
• **Yoshimura, Takao
Kanagawa-ken (JP)**
• **Akashi, Hironari
Fujisawa-shi, Kanagawa-ken (JP)**
• **Mangyo, Masao
Fujisawa-shi, Kanagawa-ken (JP)**
• **Ohno, Takeshi
Chigasaki-shi, Kanagawa-ken (JP)**
• **Kita, Ichiro
Nara-ken (JP)**
• **Yabiki, Junichiro
Chigasaki-shi, Kanagawa-ken (JP)**

(74) Representative: **Senior, Alan Murray
J.A. KEMP & CO.,
14 South Square,
Gray's Inn
London WC1R 5LX (GB)**

(56) References cited:
**EP-A- 0 317 056**     **EP-A- 0 524 552**
**DE-C- 761 672**     **FR-A- 2 476 764**

## Description

The present invention relates to reciprocating and hermetic compressors applicable to refrigerating systems and others.

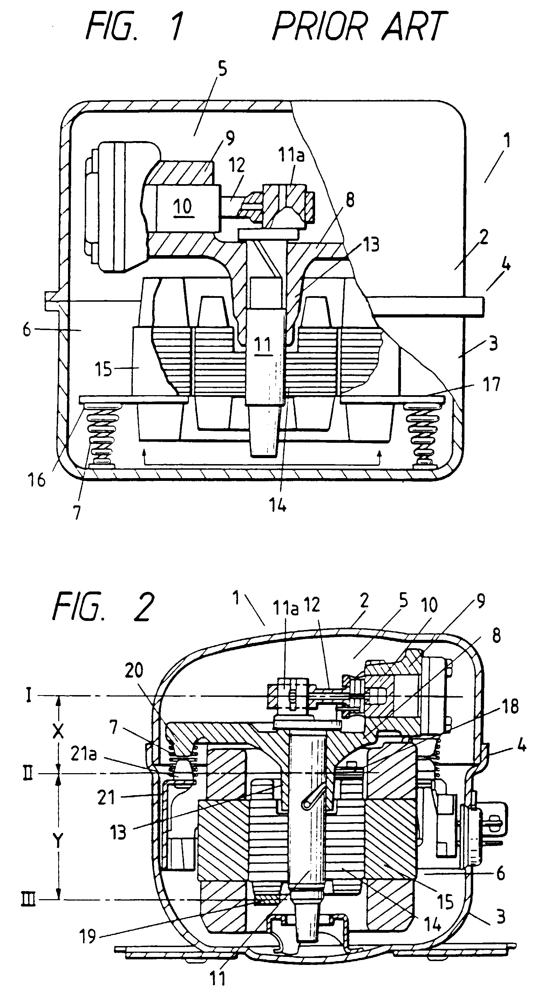

One of major problems arising in the use of hermetic compressors is occurrence of noise and vibration Recently, improvement for such hermetic compressors is being made for the noise- and vibration-reduction purposes. One known noise and vibration reduction technique is disclosed in the Japanese Utility Model Publication No. 49-18245 where a compressing unit is elastically supported by springs with respect to a closed vessel. This prior art technique will be described hereinbelow with reference to Fig. 1 which is a cross-sectional view showing a conventional hermetic compressor. In Fig. 1, designated at numeral 1 is a hermetic compressor which is equipped with a compressing unit comprising a compressing section 5 and a motor section 6 which are encased in a closed vessel 4 comprising an upper shell 2 and a lower shell 3. The compressing section 5 is constructed with a cylinder 9 formed in a block 8, a piston 10 associated with the cylinder 9, a crank shaft 11 having a crank eccentric portion (crank pin) 11a, a con'rod 12 coupled to the crank shaft 11, and a bearing 13 provided on the block 8 to support the crank shaft 11. Further, the motor section 6 is constructed with a rotor 14 and stator 15, the rotor 14 being fixedly shrinkage-fitted to the crank shaft 11 and the stator 15 being fixedly secured through screws to the block 8. In addition, on a lower end portion of the stator 15 there is provided a spring-mounting plate 17 having studs 16. Springs 7 are placed between the studs 16 and the lower shell 3 so as to elastically support the compressing section 5 and the motor section 6.

With this arrangement, when vibrations of the compressing unit occur in response to the refrigerant-compressing operation of this compressor, the springs 7 can attenuate the vibrations before the propagation to the closed vessel 4 to thereby suppress the occurrence of noises due to the vibration of the closed vessel 4.

There is a problem which arises with such a conventional compressor arrangement, however, in that a moment can be generated and applied to the crank shaft 11 due to the balance configuration of the compressing unit relative to the supporting position and hence difficulty is actually encountered to sufficiently suppress the vibration of the closed vessel.

Further, the Japanese Patent Publication No. 58-24633 discloses a technique in which a balance weight is provided at the vicinity of the crank eccentric portion 11a of the crank shaft 11. However, this arrangement cannot also sufficiently suppress the generation of the moment in the crank shaft 11.

FR-A-2,476,746 discloses a compressor upon which the precharacterising portion of claim 1 is based.

It is therefore an aim of the present invention to provide a hermetic compressor which is capable of sufficiently suppress the occurrence of noises resulting from the generation of the vibrations of the compressing unit.

According to this invention, there is provided a compressor comprising: a compressing section including a crank shaft having a crank pin, a con'rod and a piston, the piston being coupled through the con'rod to the crank pin of the crank shaft in a first plane I perpendicular to the axis of the crank shaft, the crank pin being arranged to circularly move with respect to the axis of the crank shaft in accordance with rotation of the crank shaft to cause the piston to reciprocate within a cylinder, a portion consisting of the crank pin, the con'rod and the piston has the center of gravity at a position separated by a distance rk from the axis of the crank shaft; a motor section connected to a lower side of the compressing section and comprising a rotor and a stator, the rotor being connected to the crank shaft so that the crank shaft is rotatable in response to drive of the motor section; and first and second balance weights respectively provided on upper and lower portion of the rotor of the motor section, the first balance weight being positioned in a second plane II perpendicular to the axis of the crank shaft and existing between the first plane I and a reference plane O perpendicular to the axis of the crank shaft and passing through the center of gravity of a combination of the compressing section and the motor section, and first balance weight having the center of gravity at a position separated by a distance rb from the axis of the crank shaft, and the second balance weight being positioned in a third plane III perpendicular to the axis of the crank shaft and existing at the opposite side to the first plane I with respect to the reference plane O, and the second balance weight having the center of gravity at a position separated by a distance rc from the axis of the crank shaft; and spring means for elastically supporting the compressing section and the motor section in a fourth plane IV perpendicular to the axis of the crank shaft and existing at the opposite side to the first plane I with respect to the reference plane O, wherein, when a mass of the portion consisting of the crank pin, the con'rod and the piston is taken to be M, a mass of the first balance weight is taken as mb and a mass of the second balance weight is taken as mc, the first and second balance weights are determined on the basis of the product mb • rb, the product mc • rc and the product M • rk.

More specifically, the first and second balance weights are determined so that values Nb and Nc given in accordance with the following equations are respectively in first and second predetermined ranges:

$$Nb = mb \bullet rb/M \bullet rk$$

$$Nc = mc \bullet rc/M \bullet rk$$

The first predetermined range is 0.8 to 1.2 and the second predetermined range is 0.1 to 0.5.

The features of the present invention will become more readily apparent from the following detailed description of exemplary embodiments when taken in conjunction with the accompanying drawings in which:

> Fig. 1 is a cross-sectional view showing an arrangement of a conventional hermetic compressor;
> Fig. 2 is a cross-sectional view showing an arrangement of a hermetic compressor described for reference;
> Fig. 3 is a graphic illustration for describing variations of coefficients due to rotation of a crank shaft of the hermetic compressor of Fig. 2;
> Fig. 4 is a cross-sectional view showing an arrangement of a hermetic compressor according to an embodiment of this invention;
> Fig. 5 is an enlarged view showing a portion indicated by A in Fig. 4; and
> Figs. 6 and 7 are graphic illustrations for describing vibrations of a leg portion of the hermetic compressor in the embodiment on the basis of coefficients Nb and Nc.

Referring now to Fig. 2, a hermetic compressor will be described for reference. In Fig. 2 parts corresponding to those in Fig. 1 are marked with the same numerals. The hermetic compressor, being designated at numeral 1, is similarly equipped with a compressing unit comprising a compressing section 5 and a motor section 6 which are encased in a closed vessel 4 comprising an upper shell 2 and a lower shell 3. The compressing section 5 is constructed with a cylinder 9 formed in a block 8, a piston 10 associated with the cylinder 9, a crank shaft 11 having a crank eccentric portion 11a at its end portion, a con'rod 12 coupled to of the crank eccentric portion 11a of the crank shaft 11 and further connected to the piston 10, and a bearing 13 provided on the block 8 to support the crank shaft 11. The piston 10 is arranged so that its central axis is substantially perpendicular to the axis of the crank shaft 11. The crank shaft 11 is arranged to be rotatable about its own axis so that the crank eccentric portion 11a rotationally moves with respect to the axis of the crank shaft 11. In response to the rotational movement of the crank eccentric portion 11a, the con'rod 12 is linearly moved so that the piston 10 reciprocates in the cylinder 9. Further, the motor section 6 is constructed with a rotor 14 and stator 15, the rotor 14 being fixedly secured to the crank shaft 11 and the stator 15 being provided at the periphery of the rotor 14 to be fixedly secured through screws to the block 8. The crank shaft 11 is coaxially disposed at the center portion of the motor section 6.

In this compressor an upper balance weight 18 is disposed at an upper portion of the rotor 14 and a lower balance weight 19 is disposed at a lower portion of the rotor 14, the upper and lower balance weights 18 and 19 being different by 180o in angular position and the lower balance weight 19 being substantially equal in angular position to each other. Further, studs 20 are integrally provided on the block 8, and stays 21 are fixedly secured to the loner shell 3 and equipped with pins 21a. A spring 7 is set and disposed between the stud 20 and the pin 21a of the stay 21 so as to elastically support the compressing section 5 and the motor section 6 of the compressor 1.

Here, a description will be made in terms of the determination of the weights and configurations (shapes) of the upper and lower balance weights 18 and 19. First, we consider the plane I perpendicular to the axis of the crank shaft 11 and including (passing through) the central axis of the piston 10, the plane II perpendicular to the axis of the crank shaft 11 and including the center of gravity of the upper balance weight 18 and the plane III perpendicular to the axis of the crank shaft 11 and including the center of gravity of the lower balance weight 19. The distance between the planes I and II is X and the distance between the planes II and III is Y. When the resultant force of the inertia force of the piston 10, the inertia force and centrifugal force of the con'rod 12 and the centrifugal force of the crank eccentric portion 11a on the plane I is taken to be Fa, the centrifugal force of the upper balance weight 18 on the plane II is taken to be Fb, and the centrifugal force of the lower balance weight 19 on the plane III is taken as Fc, the weights and configurations (shapes) of the upper and lower balance weights 18 and 19 are determined so that all the coefficients Cl to C3 given by the following equations (1) to (3) becomes below 3.

$$C1 = Fc \cdot (X + Y)/(Fb \cdot X) \qquad (1)$$

$$C2 = Fc \cdot Y/(Fa \cdot X) \qquad (2)$$

$$C3 = Fb \cdot Y/(Fa \cdot (X + Y)) \qquad (3)$$

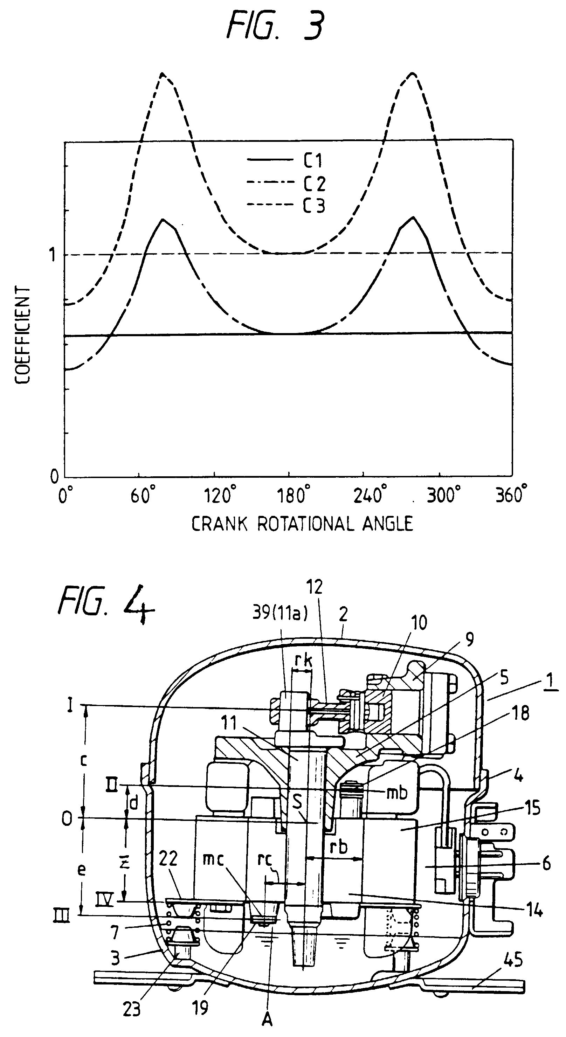

In operation, in response to driving the motor section 6, the crank shaft 11 rotates so that the crank eccentric portion 11a circularly rotates with respect to the axis of the crank shaft 11. Thus, the piston 10 connected through the con'rod 12 to the crank eccentric portion 11a reciprocates within the cylinder 9 to compress the refrigerant. Accordingly, the resultant force Fa of the centrifugal force of the crank eccentric portion 11a due to the rotation, the reciprocating inertia force of the piston 10 and the centrifugal force and reciprocating inertia force of the con'rod 12 is applied on the above-mentioned plane I. Because of variations of the reciprocating inertia force of the piston 10 and the centrifugal force and reciprocating force of the con'rod 12 during one revolution of the crank shaft 11, the resultant force Fa does not become a constant load but becoming a variable load having the periodicity corresponding to one revolution of the crank shaft 11. On the other hand, because the distances between the centers of gravity of the upper and lower balance weights 18 and 19 and the rotation axis of the crank shaft 11 are fixed and the weights of the upper and lower balance weights 18 and 19 are also fixed, the centrifugal force Fb of the upper balance weight 18 and the centrifugal force Fc of the lower balance weight 19 do not vary during one revolution of the crank shaft 11. Thus, as shown in Fig. 3, only the coefficient C1 becomes constant during one revolution of the crank shaft 11, and the other coefficients C2 and C3 respectively vary during one revolution of the crank shaft 11.

Here, the dynamic (kinematic) balance of the compressor 1 can be kept to the most desirable state when all the coefficients C1 to C3 are 1. In other words, a moment due to the loads Fa to Fc is not generated with respect to the crank shaft 11 when taking that condition. However, in the case that the compressor is of the reciprocating type, in practice difficulty is encountered to perfectly assume the dynamic balance therebetween during one revolution of the crank shaft 11. But, according to tests of the inventors, it has been found that, when all the coefficients C1 to C3 are below 3, the moment to be generated due to the loads Fa to Fc and applied to the crank shaft 11 relatively becomes small. Thus, if setting the coefficients C1 to C3 to be below 3 in addition to elastically supporting the compressing section 5 and the motor section 6 through the springs 7, it is possible to suppress the generation of noises resulting from the vibration of the closed vessel 4. According to the tests, the respective coefficients C1 to C3 become below 3 in the case that the cylinder volume is above 10 cm$^3$, become below 2.5 when the cylinder volume is 6 to 10 cm$^3$, and become below 2 when the cylinder volume is below 6 cm$^3$.

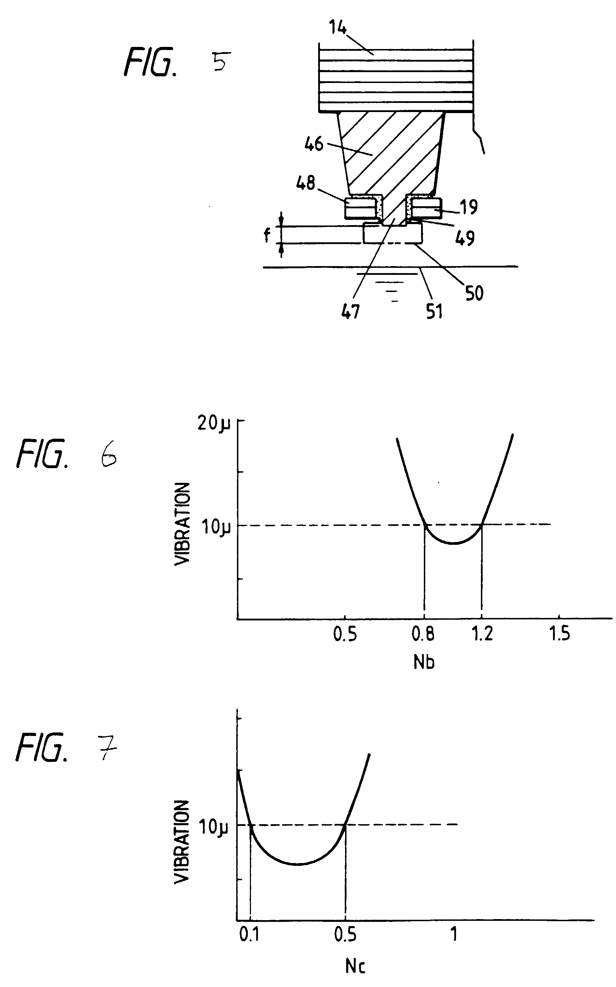

A description will be made hereinbelow with reference to Fig. 4 of a hermetic compressor according to an embodiment of this invention. In Fig. 4, parts corresponding to those in the above-described compressors are marked with the same numerals and the description thereof will be omitted for brevity. The hermetic compressor 1 similarly comprises a compressing section 5 at an upper portion and a motor section 6 at a lower portion which are encased in a closed vessel 4 comprising upper and lower shells 2 and 3, and includes upper and lower balance weights 18 and 19 provided on the upper and lower surfaces of a rotor 14 of the motor section 6. On a lower end portion of the stator 15 there is fixedly provided a spring-mounting plate 22 which is connected through springs 7 to stays 23.

The compressing unit comprising the compressing section 5 and the motor section 6 is arranged to have the center S of gravity existing in a reference plane O, and the crank pin 39 (crank eccentric portion 11a) of the crank shaft 11 is coupled to the con'rod 12 in the first plane I perpendicular to the axis of the crank shaft 11 and separated by a distance $\underline{c}$ from the reference plane O. A portion consisting of the crank pin 39, con'rod 12 and piston 10 has a mass M and has the center of gravity at a position separated by an eccentric distance rk from the axis of the crank shaft 11. The upper balance weight 18 is disposed in the second plane II between the first plane I and the reference plane O, the second plane II being perpendicular to the axis of the crank shaft 11. This balance weight 18 has a mass mb, and is arranged to have the center of gravity at a position separated by a distance rb from the axis of the crank shaft 11 and disposed at a position separated by a distance $\underline{d}$ from the reference plane O. On the other hand, the lower balance weight 19 is disposed in the third plane III perpendicular to the axis of the crank shaft 11 and existing at the opposite side to the second plane II with respect to the reference plane O. Further, the lower balance weight 19 has a mass mc, and is arranged to have the center of gravity at a position separated by a distance $\underline{rc}$ from the axis of the crank shaft 11 and disposed at a position separated by $\underline{e}$ from the reference plane O. The springs 7 are arranged to elastically act or operate with respect to the compressing unit in a fourth plane IV between the reference plane O and the third plane III. This fourth plane IV is separated by a distance $\underline{z}$ from the reference plane O.

Here, in this embodiment, the balance weights 18 and 19 are designed so that the ratios of the product of the mass mb and the distance rb and the product of the mass mc and the distance rc relative to the product of the mass M and the distance rk are in predetermined ranges whereby the radial vibration of the compressing unit in the fourth plane IV extremely becomes small. More specifically, the weights, position and others of the balance weights 18 and 19 are determined so that the value Nb obtained in accordance with the following equation (10) is in a range of 0.8 to 1.2 and the value Nc obtained in accordance with the following equation (11) is in a range of 0.1 to 0.5.

$$Nb = mb \bullet rb/M \bullet rk \qquad (10)$$

$$Nc = mc \bullet rc/M \bullet rk \qquad (11)$$

As shown in Figs. 6 and 7, when the balance weights 18 and 19 are designed so as to satisfy these conditions, the vibration of a leg portion 45 of the compressor 1 becomes below a desired value (10 μm).

According to tests, for example, in a compressor having a cylinder 9 volume of 4.8 cm$^3$, the mass M of 73 g and the eccentric distance rk of 7.65 mm, when the balance weights are not provided on the rotor 14, the vibration of the spring-mounting plate 22 is 300 to 400 μm, and when the balance weights 18 and 19 are provided so that rb = 19.5 mm, mb = 32.4 g, rc = 19.5 mm and mc = 10.8 g, the vibration of the spring-mounting plate 22 becomes 50 to 80 μm extremely smaller as compared with no provision of the balance weights, whereby the vibration of the leg portion 45 reduced through the springs 7 becomes about 8 μm below a desired value (10 μm).

According to this embodiment, since the third plane III passing through the balance weight 19 is disposed below the fourth plane IV in which the springs 7 act to the compressing unit, it is possible to sufficiently allow a space for the provision of the springs 7, thereby preventing the total height of the compressor 1 from increasing. As shown in Fig. 5 which is an enlarged view illustrating a portion indicated by character A in Fig. 4, the balance weight 19, being provided on the lower surface of the rotor 14, comprises a horn (downwardly projecting portion) 47 formed integrally with an end ring 46 of the rotor 14 and a counter weight 48 surrounding the horn 47. The horn 47 and the counter weight 48 are fixedly connected through an adequate adhesive (for example, SW-2214 manufactured by Sumitomo 3M Co., Ltd.) 49 to each other. In a conventional balance weight, the horn 47 is constructed to be longer and a counter weight is fitted and caulked as indicated by a dotted line 50. Thus, according to this arrangement, the dimension of the balance weight 19 can be reduced by $\underline{f}$, thereby reducing the total height of the compressor 1. In Fig. 5, numeral 51 represents an oil surface. It is also appropriate that the balance weight 19 is formed integrally with the end ring 46.

In this embodiment, the distances c, d, e and z are determined for taking an adequate rotational balance.

## Claims

1. A compressor comprising a compressing section including a crank shaft (11) having a crank pin (39), a con rod (12) and a piston (10), said piston being coupled through said con rod to said crank pin of said crank shaft in a first plane I perpendicular to the axis of said crank shaft, said crank pin (39) being arranged to move circularly with respect to the axis of said crank shaft (11) in accordance with rotation of said crank shaft to cause said piston (10) to reciprocate within a cylinder (9), a portion consisting of said crank pin (39), said con rod (12) and said piston (10) having its centre of gravity at a position separated by a distance rk from the axis of said crank shaft;

a motor section (6) comprising a rotor (14) and a stator (15) and disposed at a lower side of said compressing section, said rotor (14) being connected to said crank shaft (11) so that said crank shaft is rotatable in response to drive of said motor section, first and second balance weights (18, 19) respectively provided on an upper and lower portion of said rotor (14) of said motor section;

said first balance weight (18) being positioned in a second plane II perpendicular to the axis of said crank shaft (11) and existing between said first plane I and a reference plane 0, said reference plane being perpendicular to the axis of said crank shaft (11) and passing through the centre of gravity of a combination of said compressing section (4) and said motor section (6), and said first balance weight having its center of gravity at a position separated by a distance rb from the axis of said crank shaft;

said second balance weight (19) being positioned in a third plane III to the axis of said crank shaft (11) and existing at the opposite side to said first plane I with respect to said reference plane 0, and having its centre of gravity at a position separated by a distance rc from the axis of said crank shaft (11);

spring means for elastically supporting said compressing section and said motor section in a fourth plane IV perpendicular to the axis of said crank shaft (11), characterised in that said fourth plane IV exists at the opposite side to said first plane I with respect to said reference plane O; and in that

when a mass of said portion consisting of said crank pin (39), said con rod (12) and said piston (10) is taken to be M, a mass of said first balance weight (18) is taken as mb and a mass of said second balance weight (19) is taken as mc, said first and second balance weights are determined on the basis of the product mb • rb, the product mc • rc and the product M • rk, so that values Nb and Nc given in accordance with the following equations (10) and (11) are respectively in first and second predetermined ranges:

$$Nb = (mb \cdot rb)\ (M \cdot rk) \qquad (10)$$

$$Nc = (mc \cdot rc)\ (M \cdot rk) \qquad (11)$$

wherein said first predetermined range is 0.8 to 1.2 and said second predetermined range is 0.1 to 0.5.

2. A compressor as claimed in claim 1, wherein said fourth plane IV is between said reference plane O and said third plane III.

3. A compressor as claimed in claim 1 or 2, wherein said second balance weight disposed on the lower portion of said rotor comprises a projecting portion (47) integrally formed with an end ring (46) of said rotor (14) to protrude from said end ring and a counter weight (19) disposed surrounding said projecting portion, said projecting portion of said counter weight being connected together by an adhesive.

## Patentansprüche

1. Verdichter mit einem Verdichtungsabschnitt, der eine Kurbelwelle (11) mit einem Kurbelzapfen (39), eine Kurbelstange (12) und einen Kolben (10) einschließt, wobei der Kolben über die Kurbelstange mit dem Kurbelzapfen der Kurbelwelle in einer ersten Ebene I senkrecht zu der Achse der Kurbelwelle gekoppelt ist, der Kurbelzapfen (39) eingerichtet ist, um sich in Übereinstimmung mit einer Drehung der Kurbelwelle kreisförmig bezüglich der Achse der Kurbelwelle (11) zu bewegen, um zu verursachen, daß sich der Kolben (10) innerhalb eines Zylinders (9) hin- und herbewegt, und sich der Schwerpunkt eines aus dem Kurbelzapfen (39), der Kurbelstange (12) und dem Kolben (10) bestehenden Bereiches an einer Position befindet, die um einen Abstand rk von der Achse der Kurbelwelle separiert ist;

   einem Motorabschnitt (6), der einen Rotor (14) und einen Stator (15) aufweist und an einer unteren Seite des Verdichtungsabschnitts angeordnet ist, wobei der Rotor (14) derart mit der Kurbelwelle (11) verbunden ist, daß die Kurbelwelle auf einen Antrieb des Motorabschnitts hin drehbar ist;
   ersten und zweiten Balancegewichten (18, 19), die jeweils an einem oberen und unteren Abschnitt des Rotors (14) des Motorabschnitts vorgesehen sind; wobei
   das erste Balancegewicht (18) in einer zweiten Ebene II senkrecht zu der Achse der Kurbelwelle (11) positioniert und zwischen der ersten Ebene I und einer Bezugsebene 0 vorhanden ist, die Bezugsebene zur Achse der Kurbelwelle (11) senkrecht ist und durch den Schwerpunkt einer Kombination des Verdichtungsabschnitts (4) und des Motorabschnitts (6) geht, und der Schwerpunkt des ersten Balancegewichts an einer Position ist, die über einen Abstand rb von der Achse der Kurbelwelle separiert ist; sowie
   das zweite Balancegewicht (19) in einer zu der Achse der Kurbelwelle (11) dritten Ebene III positioniert ist und mit Bezug auf die Bezugsebene 0 an der gegenüberliegenden Seite der ersten Ebene I vorhanden ist, wobei dessen Schwerpunkt an einer Position vorhanden ist, die über einen Abstand rc von der Achse der Kurbelwelle (11) separiert ist; und
   einer Federeinrichtung zum elastischen Stützen des Verdichtungsabschnitts und des Motorabschnitts in einer vierten Ebene IV senkrecht zu der Achse der Kurbelwelle (11), **dadurch gekennzeichnet, daß** die vierte Ebene IV mit Bezug auf die Bezugsebene 0 an der zur ersten Ebene I gegenüberliegenden Seite vorhanden ist; und daß,
wenn eine Masse des aus dem Kurbelzapfen (39), der Kurbelstange (12) und dem Kolben (10) bestehenden Bereiches mit M, eine Masse des ersten Balancegewichts (18) mit mb und eine Masse des zweiten Balancegewichts (19) mit mc bezeichnet wird, die ersten und zweiten Balancegewichte auf der Grundlage des Produkts mb•rb, des Produkts mc•rc und des Produkts M•rk bestimmt werden, so daß sich die gemäß den folgenden Gleichungen (10) und (11) ergebenden Werte Nb und Nc jeweils in den ersten und zweiten vorbestimmten Bereichen befinden:

$$Nb = (mb \bullet rb) \, (M \bullet rk) \qquad (10)$$

$$Nc = (mc \bullet rc) \, (M \bullet rk) \qquad (11)$$

wobei der erste vorbestimmte Bereich 0,8 bis 1,2 und der zweite vorbestimmte Bereich 0,1 bis 0,5 ist.

2. Verdichter nach Anspruch 1, wobei sich die vierte Ebene IV zwischen der Bezugsebene 0 und der dritten Ebene III befindet.

3. Verdichter nach Anspruch 1 oder 2, wobei das an dem unteren Abschnitt des Rotors angeordnete zweite Balancegewicht einen Vorsprungsabschnitt (47) aufweist, der mit einem Endring (46) des Rotors (14) integral ausgebildet ist, um von dem Endring und einem um den Vorsprungsabschnitt herum angeordneten Gegengewicht vorzuragen, sowie der Vorsprungsabschnitt und das Gegengewicht über ein Haftmittel zusammen verbunden sind.

## Revendications

1. Compresseur comprenant une section de compression incluant un arbre à manivelle (11) comportant un maneton (39), une bielle (12) et un piston (10), ledit piston étant couplé par l'intermédiaire de ladite bielle audit maneton dudit arbre à manivelle dans un premier plan I perpendiculaire à l'axe dudit arbre à manivelle, ledit maneton (39) étant disposé de façon à se déplacer de manière circulaire par rapport à l'axe dudit arbre à manivelle (11) en fonction de la rotation dudit arbre à manivelle pour faire effectuer un mouvement de va-et-vient audit piston (10) à l'intérieur d'un cylindre (9), une partie constituée dudit maneton (39), de ladite bielle (12) et dudit piston (10) ayant son centre de gravité en une position séparée d'une distance rk de l'axe dudit arbre à manivelle;

une section moteur (6) comprenant un rotor (14) et un stator (15) et disposée sur un côté inférieur de ladite section de compression, ledit rotor (14) étant relié audit arbre à manivelle (11) de telle sorte que ledit arbre à manivelle puisse être entraîné en rotation par ladite section moteur,

un premier et un second poids d'équilibrage (18, 19) respectivement prévus sur des parties supérieure et inférieure dudit rotor (14) de ladite section moteur;

ledit premier poids d'équilibrage (18) étant positionné dans un second plan II perpendiculaire à l'axe dudit arbre à manivelle (11) et existant entre ledit premier plan I et un plan de référence O, ledit plan de référence étant perpendiculaire à l'axe dudit arbre à manivelle (11) et passant par le centre de gravité d'une combinaison de ladite section de compression (4) et de ladite section moteur (6), ledit premier poids d'équilibrage ayant son centre de gravité en une position séparée d'une distance rb de l'axe dudit arbre à manivelle;

ledit second poids d'équilibrage (19) étant positionné dans un troisième plan III perpendiculaire à l'axe dudit arbre à manivelle (11) et existant au côté opposé audit premier plan I par rapport audit plan de référence O, son centre de gravité étant en une position séparée par une distance rc de l'axe dudit arbre à manivelle (11);

un moyen formant ressort pour supporter de manière élastique ladite section de compression et ladite section moteur dans un quatrième plan IV perpendiculaire à l'axe dudit arbre à manivelle (11), caractérisé en ce que ledit quatrième plan IV existe au côté opposé audit premier plan I par rapport audit plan de référence O; et en ce que

en prenant la masse M de ladite partie constituée dudit maneton (39), de ladite bielle (12) et dudit piston (10), la masse mb dudit premier poids d'équilibrage (18) et la masse mc dudit second poids d'équilibrage (19), lesdits premier et second poids d'équilibrage sont déterminés à partir des produits mb • rb, mc • rc et M • rk, de sorte que les valeurs Nb et Nc calculées d'après les équations suivantes (10) et (11) sont respectivement dans une première et une seconde plages prédéterminées :

$$Nb = (mb \cdot rb) (M \cdot rk) \qquad (10)$$

$$Nc = (mc \cdot rc) (M \cdot rk) \qquad (11)$$

où ladite première plage prédéterminée va de 0,8 à 1,2 et ladite seconde plage prédéterminée va de 0,1 à 0,5.

2. Compresseur selon la revendication 1, dans lequel ledit quatrième plan IV est entre ledit plan de référence O et ledit troisième plan III.

3. Compresseur selon la revendication 1 ou 2, dans lequel ledit second poids d'équilibrage disposé sur la partie inférieure dudit rotor comprend une partie formant saillie (47) formée d'un seul tenant avec une bague (46) d'extrémité dudit rotor (14) pour dépasser de ladite bague d'extrémité et un contrepoids (19) disposé autour de ladite partie formant saillie, ladite partie formant saillie et ledit contrepoids étant reliés ensemble par un adhésif.

# FIG. 1    PRIOR ART

# FIG. 2

## FIG. 3

## FIG. 4

FIG. 5

14

46

48

19

f

49

47 51 50

FIG. 6

20μ

VIBRATION

10μ

0.5    0.8   1.2    1.5

Nb

FIG. 7

VIBRATION

10μ

0.1        0.5        1

Nc